(19) **Europäisches Patentamt**
**European Patent Office**
**Office européen des brevets**

(11) **EP 3 598 709 B1**

(12) **EUROPEAN PATENT SPECIFICATION**

(45) Date of publication and mention
of the grant of the patent:
**04.05.2022 Bulletin 2022/18**

(21) Application number: **18843993.9**

(22) Date of filing: **13.07.2018**

(51) International Patent Classification (IPC):
*H04L 27/26* (2006.01)        *H04L 1/16* (2006.01)
*H04L 1/18* (2006.01)

(52) Cooperative Patent Classification (CPC):
**H04L 1/00; H04L 1/1822; H04L 1/1896;**
**H04L 27/26; H04W 72/12**

(86) International application number:
**PCT/CN2018/095584**

(87) International publication number:
**WO 2019/029317 (14.02.2019 Gazette 2019/07)**

(54) **ACKNOWLEDGEMENT INFORMATION TRANSMISSION METHOD, TERMINAL DEVICE, AND NETWORK DEVICE**

BESTÄTIGUNGSINFORMATIONSÜBERTRAGUNGSVERFAHREN, ENDGERÄTVORRICHTUNG UND NETZWERKVORRICHTUNG

PROCÉDÉ DE TRANSMISSION D'INFORMATIONS D'ACCUSÉ DE RÉCEPTION, DISPOSITIF TERMINAL ET DISPOSITIF DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2017 CN 201710686094**

(43) Date of publication of application:
**22.01.2020 Bulletin 2020/04**

(73) Proprietor: **Huawei Technologies Co., Ltd.**
**Longgang District**
**Shenzhen, Guangdong 518129 (CN)**

(72) Inventors:
• **SUN, Hao**
**Shenzhen**
**Guangdong 518129 (CN)**
• **QU, Bingyu**
**Shenzhen**
**Guangdong 518129 (CN)**
• **ZHANG, Ruiqi**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**EP-A1- 3 043 500      WO-A1-2014/196616**
**CN-A- 101 378 306      CN-A- 104 272 634**
**CN-A- 106 899 391      US-A1- 2014 071 864**

• **NSN ET AL: "UCI on PUSCH for TDD eIMTA",
3GPP DRAFT; R1-140545, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Prague,
Czech Republic; 20140210 - 20140214 1 February
2014 (2014-02-01), XP050752103, Retrieved from
the Internet:
URL:http://www.3gpp.org/ftp/tsg_ran/WG1_RL
1/TSGR1_76/Docs/ [retrieved on 2014-02-01]**

**(Cont. next page)**

- HUAWEI ET AL: "Summary of email discussion on HARQ-ACK feedback on PUSCH for eIMTA", 3GPP DRAFT; R1-140848, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech; 20140210 - 20140214 17 February 2014 (2014-02-17), XP050770715, Retrieved from the Internet: URL:http://www.3gpp.org/ftp/tsg_ran/WG1_RL 1/TSGR1_76/Docs/ [retrieved on 2014-02-17]
- ERICSSON: "Investigation on UP Latency", 3GPP TSG-RAN WG2 #98 AdHoc, Tdoc R2-1707130, 29 June 2017 (2017-06-29), XP051301623,

**Description**

This application claims priority to Chinese Patent Application No. 201710686094.6, filed with the Chinese Patent Office on August 11, 2017 and entitled "ACKNOWLEDGEMENT INFORMATION TRANSMISSION METHOD, TERMINAL DEVICE, AND NETWORK DEVICE",

**TECHNICAL FIELD**

Embodiments of this application relate to communications systems, and in particular, to an acknowledgement information transmission method, a terminal device, and a network device.

**BACKGROUND**

In a long term evolution (Long Term Evolution, LTE) system or a 5th generation (The 5th Generation, 5G) mobile communications system, a base station sends data to a terminal device on a physical downlink shared channel (Physical Downlink Share Channel, PDSCH). The terminal device receives the data and feeds back an acknowledgement (ACKnowledgement, ACK) or a negative acknowledgment (Negative ACKnowledgement, NACK) to the base station by using uplink control information (Uplink Control Information, UCI). The ACK/NACK is used to notify the base station of whether the terminal device successfully or correctly receives the data. If the base station receives the NACK, the base station may send the data to the terminal device again.

Considering a single-carrier feature of uplink transmission and a problem of intermodulation distortion (Inter-Modulation Distortion, IMD), the LTE system or the 5G system supports transmission of the UCI on a physical uplink shared channel (Physical Uplink Share Channel, PUSCH) (UCI on PUSCH). When the UCI is transmitted on the PUSCH, a terminal transmits the UCI and uplink data by performing rate matching, in other words, after being jointly coded, the UCI and the uplink data are sent to the base station. Therefore, the base station and the terminal need to reach consensus on a quantity of pieces of UCI sent by the terminal to the base station on the PUSCH, to avoid an error occurred when the base station decodes the uplink data. The UCI includes ACK/NACK information.

The base station may send an uplink scheduling grant (Uplink Grant, UL Grant) to the terminal device, to schedule the terminal device to send the uplink data to the base station. In the UL grant, the base station notifies the terminal device of a quantity of downlink data packets that are sent by the base station. The base station and the terminal device reach consensus on the quantity of the sent downlink data packets, and the terminal sends ACK/NACK information to the base station based on the quantity of the sent downlink data packets.

In a 5G or future communications system, a base station sends a downlink data packet to a terminal device in a more flexible manner. For example, after the UL grant, the base station may further send a downlink data packet to the terminal device. An existing acknowledgement information transmission method is not flexible enough. In the UL grant, the base station fails to notify the terminal device of a quantity of downlink data packets sent by the base station to the terminal after the UL grant. As a result, the base station and the terminal device fail to reach consensus on the quantity of downlink data packets sent by the base station, an existing acknowledgement information feedback method fails to adapt to a problem, caused by flexible data sending, that the base station and the terminal do not reach consensus on a quantity of pieces of acknowledgement information, thereby causing an error when the base station decodes uplink data The document NSN ET AL: "UCI on PUSCH for TDD eIMTA", 3GPP DRAFT; R1-140545, 1 February 2014, discloses that the DAI field in the uplink grant is applied to determine the number of HARQ-ACK bits, but the uplink grant could be transmitted earlier than the latest downlink subframe within bundling window in TDD eIMTA. eNB determines the uplink DAI including downlink subframes after the uplink grant. Thus the total number of downlink packets which could be transmitted after the uplink grant are used as an estimate of how many downlink packets actually are transmitted after the uplink grant. This figure is then added to the number of downlink packets transmitted before the uplink grant, which is known. The base station and the terminal use this as an estimate of the number of ACK/ NACKs. The terminal then transmits ACK/NACK for all the packets it received and transmits a NACK for all downlink packets after the uplink grant which could have been transmitted, but were not.

**SUMMARY**

Embodiments of this application provide an acknowledgement information transmission method, a terminal device, and a network device, to avoid an error occurred when a base station decodes uplink data. This problem is solved by the subject matter of the independent claims. Further implementation forms are provided in the dependent claims.

## BRIEF DESCRIPTION OF DRAWINGS

FIG. 1 is a schematic architectural diagram of a system according to an embodiment of this application;
FIG. 2 shows an acknowledgement information transmission method, a terminal, a base station, and a system according to an embodiment of this application;
FIG. 3 shows a base station according to an embodiment of this application; and
FIG. 4 shows a terminal according to an embodiment of this application.

## DESCRIPTION OF EMBODIMENTS

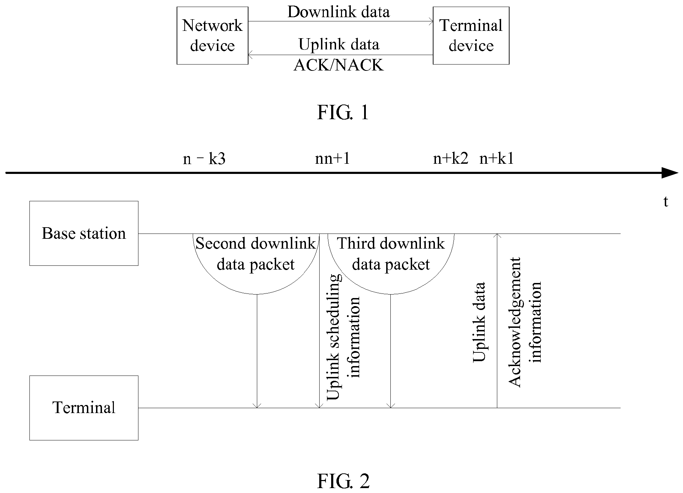

In FIG. 1, a network device sends downlink data to a terminal device, and after the terminal device receives the downlink data, the terminal device may send ACK/NACK information and uplink data to a base station. The ACK/NACK information is used by the terminal device to feed back whether the downlink data sent by the network device is successfully or correctly received. If the network device receives the ACK information, the network device may continue to send other downlink data to the terminal device, and if the network device receives the NACK information, the base station may send the downlink data to the terminal device again, thereby improving reliability of data sending.

The network device in this application is an apparatus that is deployed in a radio access network and that is configured to provide a wireless communication function for the terminal device. The network device may include various forms of base stations (Base Station, BS), such as a macro base station, a micro base station, a relay node, and an access point. In systems that use different radio access technologies, a device with a network device function may have different names. For example, the network device is a network device in a 5th generation 5G network; in an LTE network, the network device is referred to as an evolved NodeB (evolved NodeB, eNB or eNodeB for short); and in a 3rd generation 3G network, the network device is referred to as a NodeB (NodeB), or a road side unit (Road Side Unit, RSU) in V2V communication. For ease of description, in this application, the foregoing apparatus that provides the wireless communication function for the terminal device is collectively referred to as the network device.

The terminal device in this application may include various handheld devices having the wireless communication function, for example, vehicle-mounted devices, wearable devices, computing devices, or other processing devices connected to a wireless modem, mobile stations (Mobile station, MS), terminals (terminal), user equipments (User Equipment), and the like. For ease of description, in this application, the devices mentioned above are collectively referred to as the terminal devices.

The following describes embodiments of this application in more detail with reference to a specific example in which the network device is a base station and the terminal device is a terminal.

FIG. 2 shows an acknowledgement information transmission method, a terminal, a base station, and a system according to an embodiment of this application. Specific steps are as follows.

Step 21. The base station sends a second downlink data packet to the terminal on a PDSCH from a time cell n-k3 to a time cell n, and the terminal receives the second downlink data packet from the base station on the PDSCH from the time cell n-k3 to the time cell n. The time cell includes a subframe, a slot (slot), a mini slot (mini slot), an orthogonal frequency division multiplexing (Orthogonal Frequency Division Multiplexing, OFDM) multiple access symbol, a discrete Fourier transform spread orthogonal frequency division multiplexing (Discrete Fourier Transform spread OFDM, DFT-s-OFDM) symbol, or a time granularity of any length.

Step 22. The base station sends uplink scheduling information to the terminal in the time cell n. The uplink scheduling information is carried by downlink control signaling sent by the base station to the terminal. The downlink control signaling may be understood as an uplink scheduling grant (UL grant), and the terminal receives the uplink scheduling information from the base station in the time cell n. The uplink scheduling information is used to schedule a physical uplink shared channel sent by the terminal to the base station in a time cell n+k1.

The uplink scheduling information is further used to obtain a maximum quantity of first downlink data packets sent by the base station to the terminal from the time cell n-k3 to a time cell n+k2. The first downlink data packets include a second downlink data packet sent by the base station to the terminal from the time cell n-k3 to the time cell n and a third downlink data packet allowed to be sent by the base station to the terminal from the time cell n+1 to the time cell n+k2, and n is a non-negative integer. The non-negative integer is 0 or a positive integer, k1, k2, and k3 are all positive integers, and k2<k1 or k2=k1. Preferably, k2 is predefined, or k2 is indicated by the uplink scheduling information, or k2 is configured by using higher layer signaling of the network device, or k2 is determined based on a minimum hybrid automatic repeat request feedback timing capability supported by the terminal device; k3 is predefined, or k3 is indicated by the uplink scheduling information, or k3 is configured by using higher layer signaling of the network device, or k3 is determined based on a maximum quantity of hybrid automatic repeat request processes that is supported by the terminal device. The maximum quantity of the first downlink data packets is greater than a quantity of the second downlink data packets. The second downlink data packet is one or more downlink data packets.

The second downlink data packet is a data packet sent by the base station to the terminal from the time cell n-k3 to the time cell n. Therefore, the base station may obtain a specific quantity of the second downlink data packets in the time cell n. The third downlink data packet is a data packet sent by the base station to the terminal from the time cell n+1 to the time cell n+k2. A specific quantity of the third downlink data packets may be obtained in the time cell n in which the base station sends the uplink scheduling information, or may not be obtained.

When the base station may obtain, in the time cell n, the specific quantity of the third downlink data packets to be sent by the base station to the terminal from the time cell n+1 to the time cell n+k2, the base station may notify the terminal of the specific quantity of the second downlink data packets and the specific quantity of the third downlink data packets by using the uplink scheduling information, or may notify the terminal of a sum of the specific quantity of the second downlink data packets and the specific quantity of the third downlink data packets by using the uplink scheduling information.

When the base station fails to obtain, in the time cell n, the specific quantity of the third downlink data packets to be sent by the base station to the terminal from the time cell n+1 to the time cell n+k2, the base station fails to obtain, in the time cell n, a specific quantity of the third downlink data packets to be sent by the base station to the terminal behind the time cell n. In this case, the base station performs one of the following four operations.

First, the uplink scheduling information includes first indication information and second indication information, the first indication information is used to indicate a quantity of the second downlink data packets, and the second indication information is used to indicate a maximum quantity of the third downlink data packets. The base station fails to know the specific quantity of the third downlink data packets and fails to notify the terminal of the specific quantity of the third downlink data packets. Therefore, the base station may notify the terminal of the maximum quantity of the third downlink data packets by using the uplink scheduling information. In other words, no matter how many downlink data packets are sent by the base station to the terminal from the time cell n+1 to the time cell n+k2, the terminal feeds back, based only on the maximum quantity of the third downlink data packets, acknowledgement information of the downlink data packets received by the terminal from the time cell n+1 to the time cell n+k2. The terminal feeds back the acknowledgement information of the downlink data packets received by the terminal from the time cell n-k3 to the time cell n+k2 to the base station based on the quantity of the second downlink data packets and the maximum quantity of the third downlink data packets.

Second, the uplink scheduling information includes first indication information, the first indication information is used to indicate a quantity of the second downlink data packets, and a maximum quantity of the third downlink data packets is predefined or configured by using higher layer signaling of the base station. The base station or the terminal fails to know the specific quantity of the third downlink data packets and fails to notify the terminal of the specific quantity of the third downlink data packets. However, the maximum quantity of the third downlink data packets may be predefined by a protocol, or the maximum quantity of the third downlink data packets may be configured by using the higher layer signaling of the base station. Therefore, the base station or the terminal may obtain the maximum quantity of the third downlink data packets sent by the base station to the terminal from the time cell n+1 to the time cell n+k2. In other words, no matter how many downlink data packets are sent by the base station to the terminal from the time cell n+1 to the time cell n+k2, the terminal feeds back, based only on the maximum quantity of the third downlink data packets, acknowledgement information of the downlink data packets received by the terminal from the time cell n+1 to the time cell n+k2. The terminal feeds back the acknowledgement information of the downlink data packets received by the terminal from the time cell n-k3 to the time cell n+k2 to the base station based on the quantity of the second downlink data packets and the maximum quantity of the third downlink data packets.

Third, the uplink scheduling information includes first indication information, the first indication information is used to indicate a quantity $Q2$ of the second downlink data packets, and the maximum quantity of the first downlink data packets is $\min(k2', (Q3-Q2))+Q2$. In other words, the base station or the terminal determines $\min(k2', (Q3-Q2))+Q2$ as the maximum quantity of the first downlink data packets, where $k2'$ is a quantity of time cells allowed to transmit a downlink data packet from the time cell n+1 to the time cell n+k2, in other words, $k2'$ is a quantity of remaining time cells different from a time cell that cannot be used to transmit a downlink data packet from the time cell n+1 to the time cell n+k2, and the time cell that cannot be used to transmit the downlink data packet may be, for example, an uplink subframe or a reserved subframe; and $k2'+k3'\leq Q3$, $k3'$ is a quantity of time cells allowed to transmit a downlink data packet from the time cell n-k3 to the time cell n, in other words, $k3'$ is a quantity of remaining time cells different from a time cell that cannot be used to transmit a downlink data packet from the time cell n-k3 to the time cell n, the time cell that cannot be used to transmit the downlink data packet may be, for example, an uplink subframe or a reserved subframe, $Q3$ is the maximum quantity of hybrid automatic repeat request processes that is supported by the terminal device, and both $Q2$ and $Q3$ are positive integers. The base station or the terminal fails to know the specific quantity of the third downlink data packets and fails to notify the terminal of the specific quantity of the third downlink data packets. However, the base station notifies the terminal of the quantity of the second downlink data packets by using the uplink scheduling information, and the base station or the terminal determines a minimum value between $k2'$ and a value that is obtained by subtracting the quantity of the second downlink data packets from the maximum quantity of hybrid automatic repeat request processes that is supported by the terminal device, and uses a sum of the minimum value and the quantity of the second downlink data packets as the maximum quantity of the first downlink data packets. In other words, no matter how many downlink data packets are sent by the base station to the terminal from the time cell n-k3 to the time cell n+k2, the terminal feeds back, based only on the maximum quantity of the first downlink data packets, acknowledgement information of the downlink data packets received by the terminal from the base station from the time cell n-k3 to the time cell n+k2.

For example, the quantity Q2 of the second downlink data packets is 2, and the maximum quantity Q3 of hybrid automatic repeat request processes that is supported by the terminal is 6. In other words, the terminal can buffer only at most six downlink data packets. If there are seven time cells in total from the time cell n+1 to the time cell n+k2, but two of the time cells are uplink subframes that cannot be used to transmit the downlink data packet, k2' is 5, and min(5, (6-2))=4. Therefore, the maximum quantity of the first downlink data packets is 4+2=6, in other words, the maximum quantity of the first downlink data packets is the maximum quantity Q3 of hybrid automatic repeat request processes that is supported by the terminal device. If there are seven time cells in total from the time cell n+1 to the time cell n+k2, but four of the time cells are uplink subframes that cannot be used to transmit the downlink data packet, k2' is 3, and min(3, (6-2))=3. Therefore, the maximum quantity of the first downlink data packets is 3+2=5, in other words, although the terminal is still capable of continuing to buffer the downlink data packet, due to a limitation of k2, the terminal can store three downlink data packets as the third downlink data packet only after the base station sends the uplink scheduling information, where k2 is predefined, or k2 is indicated by the uplink scheduling information, or k2 is semi-statically configured by using the higher layer signaling of the network device, or k2 is determined based on the minimum hybrid automatic repeat request feedback timing capability supported by the terminal device. The minimum hybrid automatic repeat request feedback timing capability supported by the terminal device is a shortest time period t from a time point at which the terminal device receives the downlink data packet to a time point at which the terminal device sends acknowledgement information of the first downlink data packet, and t is a minimum value of (k1-k2), in other words, a minimum quantity of time cells required by the terminal to generate the acknowledgement information.

Fourth, the uplink scheduling information includes third indication information, and the third indication information is used to indicate the maximum quantity of the first downlink data packets. The base station fails to know the specific quantity of the third downlink data packets and fails to notify the terminal of the specific quantity of the third downlink data packets. However, the base station may notify the terminal of a maximum value of a sum of the quantity of the second downlink data packets and the quantity of the third downlink data packets by using the uplink scheduling information. In other words, no matter how many downlink data packets are sent by the base station to the terminal from the time cell n-k3 to the time cell n+k2, the terminal feeds back, based only on the maximum quantity of the first downlink data packets, acknowledgement information of the downlink data packets received by the terminal from the base station from the time cell n-k3 to the time cell n+k2.

The first indication information, the second indication information, or the third indication information includes a downlink assignment indicator (Downlink Assignment Indicator, DAI), and the DAI is a part of fields in the UL grant.

In the first to the third manners, although the base station fails to know, in the time cell n, the specific quantity of the third downlink data packets to be sent by the base station to the terminal from the time cell n+1 to the time cell n+k2, the base station and the terminal may obtain the maximum quantity of the first downlink data packets by using an actual quantity of the second downlink data packets and a maximum quantity of the third downlink data packets. In the fourth manner, the base station directly indicates the maximum quantity of the first downlink data packets of the terminal by using the third indication information.

Step 23. The base station sends the third downlink data packet to the terminal on the PDSCH from the time cell n+1 to the time cell n+k2, and the terminal receives the third downlink data packet from the base station on the PDSCH from the time cell n+1 to the time cell n+k2. The quantity of the third downlink data packets may be 0 or a positive integer. Preferably, both the quantity of the second downlink data packets and the quantity of the third downlink data packets are positive integers. The third downlink data packet is one or more downlink data packets.

Step 24. The base station receives acknowledgement information of the first downlink data packet from the terminal on a physical uplink shared channel PUSCH of a time cell n+k1 based on the maximum quantity of the first downlink data packets, and the terminal sends the acknowledgement information of the downlink data packet to the base station on the physical uplink shared channel PUSCH of the time cell n+k1 based on the maximum quantity of the first downlink data packets. Optionally, the acknowledgement information may be specifically ACK information or NACK information.

After step 24, the base station and the terminal reach consensus on a quantity of pieces of the acknowledgement information fed back by the terminal to the base station on the PUSCH of the time cell n+k1. For example, both the base station and the terminal may know that the acknowledgement information fed back by the terminal to the base station on the PUSCH of the time cell n+k1 is x bits, and both the base station and the terminal may also know that uplink data sent by the terminal to the base station on the PUSCH of the time cell n+k1 is y bits. Rate matching is performed by the terminal. In other words, after performing channel encoding on the y bits of the uplink data and excluding physical resources occupied for transmitting the acknowledgement information and/or other UCI from all allocated physical resources, the terminal performs rate matching, and sends the UCI and other information by using the physical resources to the base station. The base station may also decode the received data information based on the x bits of the acknowledgement information and the y bits of the uplink data, to correctly obtain acknowledgement information of the uplink data and the acknowledgement information of the downlink data packet.

The terminal feeds back the acknowledgement information to the base station based on the maximum quantity of the first downlink data packets, instead of feeding back the acknowledgement information to the base station based on an actual quantity of downlink data packets sent by the base station to the terminal. The base station also receives the acknowledgement information from the terminal based on the maximum quantity of the first downlink data packets, instead of receiving the acknowledgement information from the terminal based on the actual quantity of downlink data packets sent by the base station to the terminal. For example, if the quantity of the second downlink data packets is 2, and the maximum quantity of the third downlink data packets is 4, the maximum quantity of the first downlink data packets is 2+4=6. However, the actual quantity of the third downlink data packets sent by the base station to the terminal is just 2, a sum of the quantity of the second downlink data packets and the quantity of the third downlink data packets that are actually sent by the base station to the terminal is 4. The maximum quantity of the third downlink data packets minus the actual quantity of the third downlink data packets is 2. Therefore, the terminal does not merely feed back acknowledgement information of the actually sent second downlink data packets and acknowledgement information of the actually sent third downlink data packets, the terminal may further feed back acknowledgement information corresponding to two reserved downlink data packets for a quantity 2 of downlink data packets that are reserved but not actually sent and that are obtained by subtracting the actual quantity of the third downlink data packets from the maximum quantity of the third downlink data packets. For example, if one downlink data packet includes one transport block (Transport Block, TB), two NACKs are fed back, and if one downlink data packet includes two transport blocks TB, four NACKs are fed back.

The acknowledgement information is not generated by the terminal immediately. Instead, the generation of the acknowledgement information takes time. A shortest time for the terminal to generate the acknowledgement information may be predefined by a protocol or configured by using higher layer signaling. In addition, a value of k2 may also be predefined by a protocol or configured by using higher layer signaling, and therefore the shortest time for the terminal to generate the acknowledgement information is t, and t is a minimum value of (k1-k2). The shortest time for the terminal to generate the acknowledgement information may alternatively be determined based on a minimum hybrid automatic repeat request feedback timing capability supported by the terminal. The minimum hybrid automatic repeat request feedback timing capability supported by the terminal is a shortest time period t from a time point at which the terminal receives the downlink data packet to a time point at which the terminal sends the acknowledgement information of the downlink data packet, and t is the minimum value of (k1-k2). Although the terminal sends the acknowledgement information of the downlink data packet to the base station on the PUSCH of the time cell n+k1, the terminal needs to begin to generate the acknowledgement information at a latest time cell n+k2. In this way, the acknowledgement information of the downlink data packet can be generated in the time cell n+k1 or before the time cell n+k1, so that the acknowledgement information of the downlink data packet can be sent to the base station in the time cell n+k1.

In step 24, if the maximum quantity of the first downlink data packets is Q1, the acknowledgement information includes Q1 groups of acknowledgement information, and Q1 is a positive integer. The acknowledgement information of the downlink data packet may be fed back in a unit of a code block group (Code Block Group, CBG), and the acknowledgement information of the downlink data packet may alternatively be fed back in a unit of a transport block TB. If the base station configures the terminal to perform the feedback in a unit of a CBG from the time cell n-k3 to the time cell n+k2, a feedback of all data packets including data packets received in the time cell n+1 and the third downlink data packet is rolled back to a feedback performed by the terminal in a unit of a TB. In other words, the acknowledgement information of the third downlink data packet is generated in a unit of a transport block TB. Therefore, signaling overheads of the acknowledgement information can be reduced.

When the third downlink data packet is sent by the base station to the terminal in a plurality of carriers, acknowledgement information of the third downlink data packet in the plurality of carriers is combined to generate the acknowledgement information of the third downlink data packet in a logic AND manner. When the third downlink data packet includes a plurality of codewords, acknowledgement information of the plurality of codewords is combined to generate the acknowledgement information of the third downlink data packet in the logic AND manner. Therefore, signaling overheads of the acknowledgement information can be reduced.

In this embodiment of this application, the base station receives the acknowledgement information of the first downlink data packet from the terminal on the PUSCH of the time cell n+k1 based on the maximum quantity of the first downlink data packets. The terminal sends the acknowledgement information of the first downlink data packet to the base station on the PUSCH of the time cell n+k1 based on the maximum quantity of the first downlink data packets. The base station and the terminal reach consensus on a quantity of pieces of acknowledgement information fed back by the terminal to the base station on the PUSCH of the time cell n+k1. Therefore, when the acknowledgement information is sent on the PUSCH, a data reception error caused by a case in which the base station does not know, when decoding the data, a quantity of pieces of acknowledgement information actually sent by the terminal is avoided.

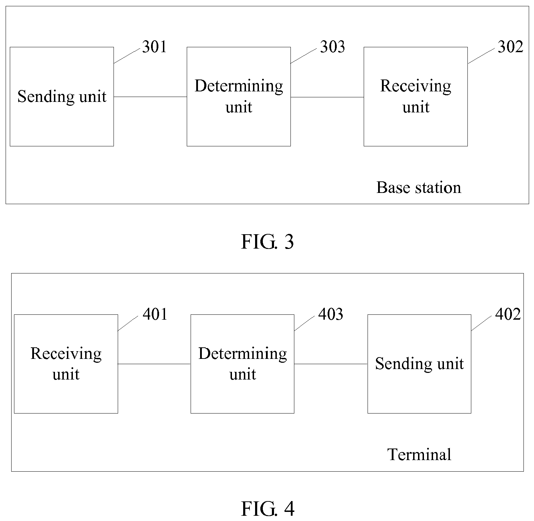

FIG. 3 is a possible schematic structural diagram of a base station configured to perform the method in the embodiment in FIG. 2. The base station includes a sending unit 301 and a receiving unit 302. The base station may further include a determining unit 303.

The sending unit 301 is configured to send uplink scheduling information to a terminal in a time cell n, where the uplink scheduling information is used to schedule a physical uplink shared channel of a time cell n+k1. The uplink scheduling information is further used to obtain a maximum quantity of first downlink data packets sent by the sending unit 301 to the terminal from a time cell n-k3 to a time cell n+k2, where n is a non-negative integer, k1, k2, and k3 are all positive integers, and k2<k1 or k2=k1. The time cell and the uplink scheduling information are the same as those in Embodiment 2. Details are not described herein again.

The receiving unit 302 is configured to receive acknowledgement information of the first downlink data packet from the terminal on the physical uplink shared channel of the time cell n+k1 based on the maximum quantity of the first downlink data packets.

The first downlink data packets include a second downlink data packet sent by the sending unit 301 to the terminal from the time cell n-k3 to a time cell n and a third downlink data packet allowed to be sent by the sending unit 301 to the terminal from the time cell n+1 to the time cell n+k2. Definitions of k2 and k3 are the same as those in the embodiment in FIG. 2. Details are not described herein again.

The second downlink data packet is a data packet sent by the base station to the terminal from the time cell n-k3 to the time cell n. Therefore, the base station may obtain a specific quantity of the second downlink data packets in the time cell n. The third downlink data packet is a data packet sent by the base station to the terminal from the time cell n+1 to the time cell n+k2. A specific quantity of the third downlink data packets may be obtained in the time cell n in which the base station sends the uplink scheduling information, or may not be obtained.

When the determining unit 303 may obtain, in the time cell n, the specific quantity of the third downlink data packets to be sent by the base station to the terminal from the time cell n+1 to the time cell n+k2, the sending unit 301 may notify the terminal of the specific quantity of the second downlink data packets and the specific quantity of the third downlink data packets by using the uplink scheduling information, or may notify the terminal of a sum of the specific quantity of the second downlink data packets and the specific quantity of the third downlink data packets by using the uplink scheduling information.

When the determining unit 303 fails to obtain, in the time cell n, the specific quantity of the third downlink data packets to be sent by the base station to the terminal from the time cell n+1 to the time cell n+k2, the determining unit 303 fails to obtain, in the time cell n, a specific quantity of the third downlink data packets to be sent by the base station to the terminal behind the time cell n. In this case, the base station performs one of the following four operations.

First, the uplink scheduling information sent by the sending unit 301 includes first indication information and second indication information, the first indication information is used to indicate a quantity of the second downlink data packets, and the second indication information is used to indicate a maximum quantity of the third downlink data packets. The base station fails to know the specific quantity of the third downlink data packets and fails to notify the terminal of the specific quantity of the third downlink data packets. Therefore, the base station may notify the terminal of the maximum quantity of the third downlink data packets by using the uplink scheduling information. In other words, no matter how many downlink data packets are sent by the sending unit 301 to the terminal from the time cell n+1 to the time cell n+k2, the terminal feeds back, based only on the maximum quantity of the third downlink data packets, acknowledgement information of the downlink data packets received by the terminal from the time cell n+1 to the time cell n+k2. The terminal feeds back the acknowledgement information of the downlink data packets received by the terminal from the time cell n-k3 to the time cell n+k2 to the base station based on the quantity of the second downlink data packets and the maximum quantity of the third downlink data packets.

Second, the uplink scheduling information sent by the sending unit 301 includes first indication information, the first indication information is used to indicate a quantity of the second downlink data packets, and a maximum quantity of the third downlink data packets is predefined or configured by using higher layer signaling of the base station. The base station or the terminal fails to know the specific quantity of the third downlink data packets and fails to notify the terminal of the specific quantity of the third downlink data packets. However, the maximum quantity of the third downlink data packets may be predefined by a protocol, or the maximum quantity of the third downlink data packets may be configured by using the higher layer signaling of the base station. Therefore, the base station or the terminal may obtain the maximum quantity of the third downlink data packets sent by the sending unit 301 to the terminal from the time cell n+1 to the time cell n+k2. In other words, no matter how many downlink data packets are sent by the sending unit 301 to the terminal from the time cell n+1 to the time cell n+k2, the terminal feeds back, based only on the maximum quantity of the third downlink data packets, acknowledgement information of the downlink data packets received by the terminal from the time cell n+1 to the time cell n+k2. The terminal feeds back the acknowledgement information of the downlink data packets received by the terminal from the time cell n-k3 to the time cell n+k2 to the base station based on the quantity of the second downlink data packets and the maximum quantity of the third downlink data packets.

Third, the uplink scheduling information sent by the sending unit 301 includes first indication information, the first indication information is used to indicate a quantity Q2 of the second downlink data packets, and the maximum quantity of the first downlink data packets is min(k2', (Q3-Q2))+Q2. In other words, the determining unit 303 of the base station or the terminal determines min(k2', (Q3-Q2))+Q2 as the maximum quantity of the first downlink data packets, where k2' is a quantity of time cells allowed to transmit a downlink data packet from the time cell n+1 to the time cell n+k2, in other words, k2' is a quantity of remaining time cells different from a time cell that cannot be used to transmit a downlink data packet from the time cell n+1 to the time cell n+k2, and the time cell that cannot be used to transmit the downlink data packet may be, for example, an uplink subframe or a reserved subframe; and k2'+k3'≤Q3, k3' is a quantity of time cells allowed to transmit a downlink data packet from the time cell n-k3 to the time cell n, in other words, k3' is a quantity of remaining time cells different from a time cell that cannot be used to transmit a downlink data packet from the time cell n-k3 to the time cell n, the time cell that cannot be used to transmit the downlink data packet may be, for example, an uplink subframe or a reserved subframe, Q3 is the maximum quantity of hybrid automatic repeat request processes that is supported by the terminal device, and both Q2 and Q3 are positive integers. The base station or the terminal fails to know the specific quantity of the third downlink data packets and fails to notify the terminal of the specific quantity of the third downlink data packets. However, the sending unit 301 may notify the terminal of the quantity of the second downlink data packets by using the uplink scheduling information, the determining unit 303 of the base station or the terminal determines a minimum value between k2' and a value that is obtained by subtracting the quantity of the second downlink data packets from the maximum quantity of hybrid automatic repeat request processes that is supported by the terminal device, and uses a sum of the minimum value and the quantity of the second downlink data packets as the maximum quantity of the first downlink data packets. In other words, no matter how many downlink data packets are sent by the sending unit 301 to the terminal from the time cell n-k3 to the time cell n+k2, the terminal feeds back, based only on the maximum quantity of the first downlink data packets, acknowledgement information of the downlink data packets received by the terminal from the base station from the time cell n-k3 to the time cell n+k2.

For example, the quantity Q2 of the second downlink data packets is 2, and the maximum quantity Q3 of hybrid automatic repeat request processes that is supported by the terminal is 6. In other words, the terminal can buffer only at most six downlink data packets. If there are seven time cells in total from the time cell n+1 to the time cell n+k2, but two of the time cells are uplink subframes that cannot be used to transmit the downlink data packet, k2' is 5 and min(5, (6-2))=4. Therefore, the maximum quantity of the first downlink data packets is 4+2=6, in other words, the maximum quantity of the first downlink data packets is the maximum quantity Q3 of hybrid automatic repeat request processes that is supported by the terminal device. If there are seven time cells in total from the time cell n+1 to the time cell n+k2, but four of the time cells arc uplink subframes that cannot be used to transmit the downlink data packet, k2' is 3 and min(3, (6-2))=3. Therefore, the maximum quantity of the first downlink data packets is 3+2=5, in other words, although the terminal is still capable of continuing to buffer the downlink data packet, due to a limitation of k2, the terminal can store three downlink data packets as the third downlink data packet only after the sending unit 301 of the base station sends the uplink scheduling information, where k2 is predefined, or k2 is indicated by the uplink scheduling information, or k2 is semi-statically configured by using higher layer signaling of the network device, or k2 is determined based on a minimum hybrid automatic repeat request feedback timing capability supported by the terminal device. The minimum hybrid automatic repeat request feedback timing capability supported by the terminal device is a shortest time period t from a time point at which the terminal device receives the downlink data packet to a time point at which the terminal device sends acknowledgement information of the first downlink data packet, and t is a minimum value of (k1-k2), in other words, a minimum quantity of time cells required by the terminal to generate the acknowledgement information.

Fourth, the uplink scheduling information sent by the sending unit 301 includes third indication information, and the third indication information is used to indicate the maximum quantity of the first downlink data packets. The base station fails to know the specific quantity of the third downlink data packets and fails to notify the terminal of the specific quantity of the third downlink data packets. However, the sending unit 301 may notify the terminal of a maximum value of a sum of the quantity of the second downlink data packets and the quantity of the third downlink data packets by using the uplink scheduling information. In other words, no matter how many downlink data packets are sent by the sending unit 301 to the terminal from the time cell n-k3 to the time cell n+k2, the terminal feeds back, based only on the maximum quantity of the first downlink data packets, acknowledgement information of the downlink data packets received by the terminal from the base station from the time cell n-k3 to the time cell n+k2.

In the first to the third manners, although the base station fails to know, in the time cell n, the specific quantity of the third downlink data packets to be sent by the base station to the terminal from the time cell n+1 to the time cell n+k2, the base station and the terminal may obtain the maximum quantity of the first downlink data packets by using an actual quantity of the second downlink data packets and a maximum quantity of the third downlink data packets. In the fourth manner, the base station directly indicates the maximum quantity of the first downlink data packets of the terminal by using the third indication information.

The first indication information, the second indication information, or the third indication information includes a downlink assignment indicator, and the DAI is a part of fields in the UL grant.

The maximum quantity of the first downlink data packets is Q1, the acknowledgement information includes Q1 groups of acknowledgement information, and Q1 is a positive integer. The acknowledgement information of the downlink data packet may be fed back in a unit of a CBG, or the acknowledgement information of the downlink data packet may be fed back in a unit of a transport block TB. If the base station configures the terminal to perform the feedback in a unit of a CBG from the time cell n-k3 to the time cell n+k2, a feedback of all data packets including data packets received in the time cell n+1 and the third downlink data packet is rolled back to a feedback performed by the terminal in a unit of a TB. In other words, the acknowledgement information of the third downlink data packet is generated in a unit of a transport block TB. Therefore, signaling overheads of the acknowledgement information can be reduced.

When the third downlink data packet is sent by the sending unit to the terminal in a plurality of carriers, acknowledgement information of the third downlink data packet in the plurality of carriers is combined by the determining unit 303 to generate the acknowledgement information of the third downlink data packet in a logic AND manner. When the third downlink data packet includes a plurality of codewords, acknowledgement information of the plurality of codewords is combined by the determining unit 303 to generate the acknowledgement information of the third downlink data packet in the logic AND manner.

The sending unit 301 may be a transmitter or a transceiver, the receiving unit 302 may be a receiver or a transceiver, and the determining unit 303 may be a processor. In addition, the base station may further include a memory connected to the processor. The memory is configured to store program code, an instruction, or data, and the processor is configured to execute the code or the instruction stored in the memory.

A chip is provided, configured to perform the steps performed by the base station in the embodiment in FIG. 2. The chip may have a part of functions of a memory, a processor, a transmitter, a receiver, and/or a transceiver, and the memory stores an instruction, code, and/or data, to enable the chip to perform the steps performed by the base station in the embodiment in FIG. 2.

In this embodiment of this application, the base station receives the acknowledgement information of the first downlink data packet from the terminal on the PUSCH of the time cell n+k1 based on the maximum quantity of the first downlink data packets. The terminal sends the acknowledgement information of the first downlink data packet to the base station on the PUSCH of the time cell n+k1 based on the maximum quantity of the first downlink data packets. The base station and the terminal reach consensus on a quantity of pieces of acknowledgement information fed back by the terminal to the base station on the PUSCH of the time cell n+k1. Therefore, when the acknowledgement information is sent on the PUSCH, a data reception error caused by a case in which the base station does not know, when decoding the data, a quantity of pieces of acknowledgement information actually sent by the terminal is avoided.

FIG. 4 is a possible schematic structural diagram of a terminal configured to perform the method in the embodiment in FIG. 2. The terminal includes a receiving unit 401 and a sending unit 402. The terminal may further include a generation unit 403.

The receiving unit 401 is configured to receive uplink scheduling information from a base station in a time cell n, where the uplink scheduling information is used to schedule a physical uplink shared channel of a time cell n+k1, the uplink scheduling information is further used to obtain a maximum quantity of first downlink data packets sent by the base station to the terminal device from a time cell n-k3 to a time cell n+k2, where n is a non-negative integer, k1, k2, and k3 are all positive integers, and k2<kl or k2=k1. The time cell and the uplink scheduling information are the same as those in Embodiment 2. Details are not described herein again.

The sending unit 402 is configured to send acknowledgement information of the first downlink data packet to the base station on the physical uplink shared channel of the time cell n+k1 based on the maximum quantity of the first downlink data packets.

The first downlink data packets include a second downlink data packet sent by the base station to the terminal device from the time cell n-k3 to a time cell n and a third downlink data packet allowed to be sent by the base station to the terminal device from the time cell n+1 to the time cell n+k2. Definitions of k2 and k3 are the same as those in the embodiment in FIG. 2. Details are not described herein again.

The second downlink data packet is a data packet sent by the base station to the terminal from the time cell n-k3 to the time cell n. Therefore, the base station may obtain a specific quantity of the second downlink data packets in the time cell n. The third downlink data packet is a data packet sent by the base station to the terminal from the time cell n+1 to the time cell n+k2. A specific quantity of the third downlink data packets may be obtained in the time cell n in which the base station sends the uplink scheduling information, or may not be obtained.

When the base station may obtain, in the time cell n, the specific quantity of the third downlink data packets to be sent by the base station to the terminal from the time cell n+1 to the time cell n+k2, the base station may notify the terminal of the specific quantity of the second downlink data packets and the specific quantity of the third downlink data packets by using the uplink scheduling information, or may notify the terminal of a sum of the specific quantity of the second downlink data packets and the specific quantity of the third downlink data packets by using the uplink scheduling information.

When the base station fails to obtain, in the time cell n, the specific quantity of the third downlink data packets to be sent by the base station to the terminal from the time cell n+1 to the time cell n+k2, the base station fails to obtain, in the time cell n, a specific quantity of the third downlink data packets to be sent by the base station to the terminal behind the time cell n. In this case, the terminal performs one of the following four operations.

First, the uplink scheduling information includes first indication information and second indication information, the first indication information is used to indicate a quantity of the second downlink data packets, and the second indication information is used to indicate a maximum quantity of the third downlink data packets. The base station fails to know a specific quantity of the third downlink data packets and fails to notify the terminal of the specific quantity of the third downlink data packets. Therefore, the base station may notify the terminal of the maximum quantity of the third downlink data packets by using the uplink scheduling information, and the receiving unit 401 of the terminal may receive the uplink scheduling information and obtain the maximum quantity of the third downlink data packets In other words, no matter how many downlink data packets are sent by the base station to the terminal from the time cell n+1 to the time cell n+k2, the terminal feeds back, based only on the maximum quantity of the third downlink data packets, acknowledgement information of the downlink data packets received by the terminal from the time cell n+1 to the time cell n+k2. The sending unit 402 feeds back the acknowledgement information of the downlink data packets received by the terminal from the time cell n-k3 to the time cell n+k2 to the base station based on the quantity of the second downlink data packets and the maximum quantity of the third downlink data packets.

Second, the uplink scheduling information includes first indication information, the first indication information is used to indicate a quantity of the second downlink data packets, and a maximum quantity of the third downlink data packets is predefined or configured by using higher layer signaling of the base station. The terminal fails to know the specific quantity of the third downlink data packets and fails to notify the terminal of the specific quantity of the third downlink data packets. However, the maximum quantity of the third downlink data packets may be predefined by a protocol, or the maximum quantity of the third downlink data packets may be configured by using the higher layer signaling of the base station. Therefore, the base station may obtain the maximum quantity of the third downlink data packets from the time cell n+1 to the time cell n+k2. In other words, no matter how many downlink data packets are sent by the base station to the terminal from the time cell n+1 to the time cell n+k2, the terminal feeds back, based only on the maximum quantity of the third downlink data packets, acknowledgement information of the downlink data packets received by the terminal from the time cell n+1 to the time cell n+k2. The sending unit 402 feeds back the acknowledgement information of the downlink data packets received by the terminal from the time cell n-k3 to the time cell n+k2 to the base station based on the quantity of the second downlink data packets and the maximum quantity of the third downlink data packets.

Third, the uplink scheduling information includes first indication information, the first indication information is used to indicate a quantity Q2 of the second downlink data packets, and the maximum quantity of the first downlink data packets is min(k2', (Q3-Q2))+Q2. In other words, the terminal determines min(k2', (Q3-Q2))+Q2 as the maximum quantity of the first downlink data packets, where k2' is a quantity of time cells allowed to transmit a downlink data packet from the time cell n+1 to the time cell n+k2, in other words, k2' is a quantity of remaining time cells different from a time cell that cannot be used to transmit a downlink data packet from the time cell n+1 to the time cell n+k2, and the time cell that cannot be used to transmit the downlink data packet may be, for example, an uplink subframe or a reserved subframe; and k2'+k3'≤Q3, k3' is a quantity of time cells allowed to transmit a downlink data packet from the time cell n-k3 to the time cell n, in other words, k3' is a quantity of remaining time cells different from a time cell that cannot be used to transmit the downlink data packet from the time cell n-k3 to the time cell n, the time cell that cannot be used to transmit the downlink data packet may be, for example, an uplink subframe or a reserved subframe, Q3 is a maximum quantity of hybrid automatic repeat request processes that is supported by the terminal device, and both Q2 and Q3 arc positive integers. The base station or the terminal fails to know the specific quantity of the third downlink data packets and fails to notify the terminal of the specific quantity of the third downlink data packets. However, the base station notifies the terminal of the quantity of the second downlink data packets by using the uplink scheduling information, and the generation unit 403 of the terminal determines a minimum value between k2' and a value that is obtained by subtracting the quantity of the second downlink data packets from the maximum quantity of hybrid automatic repeat request processes that is supported by the terminal device, and uses a sum of the minimum value and the quantity of the second downlink data packets as the maximum quantity of the first downlink data packets. In other words, no matter how many downlink data packets are sent by the base station to the terminal from the time cell n-k3 to the time cell n+k2, the sending unit 402 feeds back, based only on the maximum quantity of the first downlink data packets, acknowledgement information of the downlink data packets received by the terminal from the base station from the time cell n-k3 to the time cell n+k2.

For example, the quantity Q2 of the second downlink data packets is 2, and the maximum quantity Q3 of hybrid automatic repeat request processes that is supported by the terminal is 6. In other words, the terminal can buffer only at most six downlink data packets. If there are seven time cells in total from the time cell n+1 to the time cell n+k2, but two of the time cells are uplink subframes that cannot be used to transmit the downlink data packet, k2' is 5 and min(5, (6-2))=4. Therefore, the maximum quantity of the first downlink data packets is 4+2=6, in other words, the maximum quantity of the first downlink data packets is the maximum quantity Q3 of hybrid automatic repeat request processes that is supported by the terminal device. If there are seven time cells in total from the time cell n+1 to the time cell n+k2, but four of the time cells are uplink subframes that cannot be used to transmit the downlink data packet, k2' is 3 and min(3, (6-2))=3. Therefore, the maximum quantity of the first downlink data packets is 3+2=5, in other words, although the terminal is still capable of continuing to buffer the downlink data packet, due to a limitation of k2, the terminal can store three downlink data packets as the third downlink data packet only after the base station sends the uplink scheduling information, where k2 is predefined, or k2 is indicated by the uplink scheduling information, or k2 is semi-statically configured by using higher layer signaling of the network device, or k2 is determined based on a minimum hybrid automatic repeat request feedback timing capability supported by the terminal device. The minimum hybrid automatic repeat request feedback timing capability supported by the terminal device is a shortest time period t from a time point at which the terminal device receives the downlink data packet to a time point at which the terminal device sends acknowledgement information of the first downlink data packet, and t is a minimum value of (k1-k2), in other words, a minimum quantity of time cells required by the generation unit 403 to generate the acknowledgement information.

Fourth, the uplink scheduling information includes third indication information, and the third indication information is used to indicate the maximum quantity of the first downlink data packets. The base station fails to know the specific quantity of the third downlink data packets and fails to notify the terminal of the specific quantity of the third downlink data packets. However, the base station may notify the terminal of a maximum value of a sum of the quantity of the second downlink data packets and the quantity of the third downlink data packets by using the uplink scheduling information. In other words, no matter how many downlink data packets are sent by the base station to the terminal from the time cell n-k3 to the time cell n+k2, the sending unit 402 feeds back, based only on the maximum quantity of the first downlink data packets, acknowledgement information of the downlink data packets received by the terminal from the base station from the time cell n-k3 to the time cell n+k2.

The first indication information, the second indication information, or the third indication information includes a downlink assignment indicator (Downlink Assignment Indicator, DAI), and the DAI is a part of fields in the UL grant.

The generation unit 403 is configured to begin to generate the acknowledgement information of the first downlink data packet in the time cell n+k2.

The maximum quantity of the first downlink data packets is Q1, the acknowledgement information includes Q1 groups of acknowledgement information, and Q1 is a positive integer. The acknowledgement information of the downlink data packet may be fed back in a unit of a CBG, or the acknowledgement information of the downlink data packet may be fed back in a unit of a transport block TB. If the base station configures the terminal to perform the feedback in a unit of a CBG from the time cell n-k3 to the time cell n+k2, a feedback of all data packets including data packets in the time cell n+1 and the third downlink data packet is rolled back to a feedback performed by the terminal in a unit of a TB. In other words, the acknowledgement information of the third downlink data packet is generated in a unit of a transport block TB. Therefore, signaling overheads of the acknowledgement information can be reduced.

When the third downlink data packet is sent by the sending unit to the terminal in a plurality of carriers, acknowledgement information of the third downlink data packet in the plurality of carriers is combined by the generation unit 403 to generate the acknowledgement information of the third downlink data packet in a logic AND manner. When the third downlink data packet includes a plurality of codewords, acknowledgement information of the plurality of codewords is combined by the generation unit 403 to generate the acknowledgement information of the third downlink data packet in the logic AND manner.

The receiving unit 401 may be a receiver or a transceiver, the sending unit 402 may be a transmitter or a transceiver, and the generation unit 403 may be a determining unit or a processor. In addition, the terminal may further include a memory connected to the processor. The memory is configured to store program code, an instruction, or data, and the processor is configured to execute the code or the instruction stored in the memory.

A chip is provided, configured to perform the steps performed by the terminal in the embodiment in FIG. 2. The chip may have a part of functions of a memory, a processor, a transmitter, a receiver, and/or a transceiver, and the memory stores an instruction, code, and/or data, to enable the chip to perform the steps performed by the terminal in the embodiment in FIG. 2.

In this embodiment of this application, the base station receives the acknowledgement information of the first downlink data packet from the terminal on the PUSCH of the time cell n+k1 based on the maximum quantity of the first downlink data packets. The terminal sends the acknowledgement information of the first downlink data packet to the base station on the PUSCH of the time cell n+k1 based on the maximum quantity of the first downlink data packets. The base station and the terminal reach consensus on a quantity of pieces of acknowledgement information fed back by the terminal to the base station on the PUSCH of the time cell n+k1. Therefore, when the acknowledgement information is sent on the PUSCH, a data reception error caused by a case in which the base station does not know, when decoding the data, a quantity of pieces of acknowledgement information actually sent by the terminal is avoided.

The units described as separate parts may or may not be physically separate. Parts displayed as units may or may not be physical units, and may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The storage medium includes various media that can store program code, such as a USB flash drive, a removable hard disk, a read-only memory (ROM, Read-Only Memory), a random access memory (RAM, Random Access Memory), a magnetic disk, or an optical disc.

**Claims**

1. An acknowledgement information sending method performed by a terminal device, the method comprising:

    • receiving uplink scheduling information from a network device in a time cell n, wherein the uplink scheduling information is used to:

        ◦ schedule a physical uplink shared channel of a time cell n+k1, and
        ◦ obtain a maximum quantity of first downlink data packets allowed to be sent by the network device to the terminal device from a time cell n-k3 to a time cell n+k2, wherein n is a non-negative integer, k1, k2, and k3 are all positive integers, and k2<ki or k2=k1,

    • receiving first downlink data packets whose quantity is less than or equal to the maximum quantity of first downlink data packets from the network device, the first downlink data packets comprising:

        ◦ second downlink data packets sent by the network device to the terminal device from the time cell n-k3 to the time cell n, and
        ◦ third downlink data packets sent by the network device to the terminal device from the time cell n+1 to the time cell n+k2,

    wherein the uplink scheduling information comprises first indication information, the first indication information is used to indicate a quantity Q2 of the second downlink data packets,
    • determining the maximum quantity of the first downlink data packets according to the formula:

    $$\min(k2', (Q3-Q2))+Q2,$$

    wherein k2' is a quantity of time cells allowed to transmit a downlink data packet from the time cell n+1 to the time cell n+k2, Q3 is a maximum quantity of hybrid automatic repeat request processes that is supported by the terminal device, Q2 is a non-negative integer and Q2 indicates a quantity of the second downlink data packets, and Q3 is a positive integer; and
    • sending acknowledgement information of the first downlink data packets to the network device on the physical uplink shared channel of the time cell n+k1 based on the determined maximum quantity of the first downlink data packets.

2. The method according to claim 1, wherein
   the first indication information comprises a downlink assignment indicator, DAI.

3. The method according to any one of claims 1 to 2, wherein
   the maximum quantity of the first downlink data packets is Q1, the acknowledgement information comprises Q1 groups of acknowledgement information, and Q1 is a positive integer.

4. The method according to any one of claims 1 to 3, wherein

k2 is predefined, or k2 is indicated by the uplink scheduling information, or k2 is configured by using the higher layer signaling of the network device, or k2 is determined based on a minimum hybrid automatic repeat request feedback timing capability supported by the terminal device.

5. The method according to any one of claims 1 to 4, wherein
k3 is predefined, or k3 is indicated by the uplink scheduling information, or k3 is configured by using the higher layer signaling of the network device, or k3 is determined based on the maximum quantity of hybrid automatic repeat request processes that is supported by the terminal device.

6. The method according to any one of claims 1 to 5, wherein k2'+k3'≤Q3, and k3' is a quantity of time cells allowed to transmit a downlink data packet from the time cell n-k3 to the time cell n.

7. The method according to any one of claims 1 to 6, wherein
the minimum hybrid automatic repeat request feedback timing capability supported by the terminal device is a shortest time period t from a time point at which the terminal device receives a last downlink data packet among the first downlink data packets to a time point at which the terminal device sends the acknowledgement information of the first downlink data packets, and t is a minimum value of (k1-k2).

8. The method according to any one of claims 1 to 7, wherein the method further comprises:
beginning to generate the acknowledgement information of the first downlink data packet in the time cell n+k2.

9. The method according to any one of claims 1 to 8, wherein
acknowledgement information of the third downlink data packets is generated in a unit of a transport block, TB.

10. The method according to any one of claims 1 to 9, wherein
the third downlink data packets are received by the terminal device from the network device in a plurality of carriers, and acknowledgement information of the third downlink data packets in the plurality of carriers is combined to generate the acknowledgement information of the third downlink data packets in a logic AND manner.

11. A terminal device configured to perform any of the methods according to claims 1 - 10.

12. An acknowledgement information receiving method performed by a network device, the method comprising:

• sending uplink scheduling information to a terminal device in a time cell n, wherein the uplink scheduling information is used to:

○ schedule a physical uplink shared channel of a time cell n+k1, and
○ obtain a maximum quantity of first downlink data packets sent by the network device to the terminal device from a time cell n-k3 to a time cell n+k2, wherein n is a non-negative integer, k1, k2, and k3 are all positive integers, and k2<k1 or k2=k1;

• sending first downlink data packets whose quantity is less than or equal to the maximum quantity of first downlink data packets to the terminal device, the first downlink data packets comprising:

○ second downlink data packets sent by the network device to the terminal device from the time cell n-k3 to the time cell n, and
○ third downlink data packets sent by the network device to the terminal device from the time cell n+1 to the time cell n+k2,

wherein the uplink scheduling information comprises first indication information, the first indication information is used to indicate a quantity Q2 of the second downlink data packets,
• determining the maximum quantity of the first downlink data packets according to the formula:

$$\min(k2', (Q3-Q2))+Q2,$$

wherein k2' is a quantity of time cells allowed to transmit a downlink data packet from the time cell n+1 to the time cell n+k2, Q3 is a maximum quantity of hybrid automatic repeat request processes that is supported by the terminal device, Q2 is a non-negative integer and Q2 indicates a quantity of the second downlink data packets, and Q3 is a positive integer;

• receiving acknowledgement information of the first downlink data packet from the terminal device on the physical uplink shared channel of the time cell n+k1 based on the determined maximum quantity of the first downlink data packets.

**13.** A network device configured to perform the method according to claim 12.

**Patentansprüche**

**1.** Quittungsinformationensendeverfahren, das durch ein Endgerät durchgeführt wird, wobei das Verfahren Folgendes umfasst:

• Empfangen von Uplink-Ablaufsteuerungsinformationen von einer Netzwerkvorrichtung in einem Zeitfach n, wobei die Uplink-Ablaufsteuerungsinformationen für Folgendes verwendet werden:

◦ Durchführen einer Ablaufsteuerung eines gemeinsam genutzten physikalischen Uplink-Kanals eines Zeitfachs n+k1 und
◦ Erhalten einer maximalen Anzahl erster Downlink-Datenpakete, die durch die Netzwerkvorrichtung an das Endgerät von einem Zeitfach n-k3 zu einem Zeitfach n+k2 gesendet werden dürfen, wobei n eine nicht negative ganze Zahl ist, k1, k2, und ist k3 alle positive ganze Zahlen sind und k2<k1 oder k2=k1,

• Empfangen erster Downlink-Datenpakete, deren Anzahl kleiner als oder gleich der maximalen Anzahl erster Downlink-Datenpakete von der Netzwerkvorrichtung ist, wobei die ersten Downlink-Datenpakete Folgendes umfassen:

◦ zweite Downlink-Datenpakete, die durch die Netzwerkvorrichtung an das Endgerät von dem Zeitfach n-k3 zu dem Zeitfach n gesendet werden, und
◦ dritte Downlink-Datenpakete, die durch die Netzwerkvorrichtung an das Endgerät von dem Zeitfach n+1 zu dem Zeitfach n+k2 gesendet werden,

wobei die Uplink-Ablaufsteuerungsinformationen erste Anzeigeinformationen umfassen, wobei die ersten Anzeigeinformationen verwendet werden, um eine Anzahl Q2 der zweiten Downlink-Datenpakete anzuzeigen,
• Bestimmen der maximalen Anzahl der ersten Downlink-Datenpakete gemäß der folgenden Formel:

$$\min(k2', (Q3-Q2))+Q2,$$

wobei k2' eine Anzahl von Zeitfächern ist, die ein Downlink-Datenpaket von dem Zeitfach n+1 zu dem Zeitfach n+k2 übertragen dürfen, Q3 eine maximale Anzahl von hybriden automatischen Wiederholungsanforderungsprozessen ist, die durch das Endgerät unterstützt werden, Q2 eine nicht negative ganze Zahl ist und Q2 eine Anzahl der zweiten Downlink-Datenpakete anzeigt und Q3 eine positive ganze Zahl ist; und
• Senden von Quittungsinformationen der ersten Downlink-Datenpakete an die Netzwerkvorrichtung auf dem gemeinsam genutzten physikalischen Uplink-Kanal des Zeitfachs n+k1 basierend auf der bestimmten maximalen Anzahl der ersten Downlink-Datenpakete.

**2.** Verfahren nach Anspruch 1, wobei
die ersten Anzeigeinformationen einen Downlink-Zuweisungsindikator (downlink assignment indicator - DAI) umfassen.

**3.** Verfahren nach einem der Ansprüche 1 bis 2, wobei
die maximale Anzahl der ersten Downlink-Datenpakete Q1 ist, die Quittungsinformationen Q1 Gruppen von Quittungsinformationen umfassen und Q1 eine positive ganze Zahl ist.

**4.** Verfahren nach einem der Ansprüche 1 bis 3, wobei
k2 vordefiniert ist oder k2 durch die Uplink-Ablaufsteuerungsinformationen angezeigt wird oder k2 durch Verwenden der Signalisierung einer höheren Schicht der Netzwerkvorrichtung konfiguriert wird oder k2 basierend auf einer minimalen Fähigkeit einer Rückkopplungszeitsteuerung einer hybriden automatischen Wiederholungsanforderung bestimmt wird, die durch das Endgerät unterstützt wird.

5. Verfahren nach einem der Ansprüche 1 bis 4, wobei
k3 vordefiniert ist oder k3 durch die Uplink-Ablaufsteuerungsinformationen angezeigt wird oder k3 durch Verwenden der Signalisierung der höheren Schicht der Netzwerkvorrichtung konfiguriert wird oder k3 basierend auf der maximalen Anzahl von Prozessen der hybriden automatischen Wiederholungsanforderung bestimmt wird, die durch das Endgerät unterstützt werden.

6. Verfahren nach einem der Ansprüche 1 bis 5, wobei k2'+k3'≤Q3 und k3' eine Anzahl von Zeitfächern ist, die ein Downlink-Datenpaket von dem Zeitfach n-k3 zu dem Zeitfach n übertragen dürfen.

7. Verfahren nach einem der Ansprüche 1 bis 6, wobei
die minimale Fähigkeit der Rückkopplungszeitsteuerung der hybriden automatischen Wiederholungsanforderung, die durch das Endgerät unterstützt wird, ein kürzester Zeitraum t von einem Zeitpunkt, zu dem das Endgerät ein letztes Downlink-Datenpaket unter den ersten Downlink-Datenpaketen empfängt, bis zu einem Zeitpunkt ist, zu dem das Endgerät die Quittungsinformationen der ersten Downlink-Datenpakete sendet, und t ein minimaler Wert von (k1-k2) ist.

8. Verfahren nach einem der Ansprüche 1 bis 7, wobei das Verfahren ferner Folgendes umfasst:
Beginnen, die Quittungsinformationen des ersten Downlink-Datenpakets in dem Zeitfach n+k2 zu erzeugen.

9. Verfahren nach einem der Ansprüche 1 bis 8, wobei
Quittungsinformationen der dritten Downlink-Datenpakete in einer Einheit eines Transportblocks (TB) erzeugt werden.

10. Verfahren nach einem der Ansprüche 1 bis 9, wobei
die dritten Downlink-Datenpakete durch das Endgerät von der Netzwerkvorrichtung in mehreren Trägern empfangen werden und Quittungsinformationen der dritten Downlink-Datenpakete in den mehreren Trägern kombiniert werden, um die Quittungsinformationen der dritten Downlink-Datenpakete in einer logischen UND-Weise zu erzeugen.

11. Endgerät, das konfiguriert ist, um eines der Verfahren nach den Ansprüchen 1-10 durchzuführen.

12. Quittungsinformationenempfangsverfahren, das durch eine Netzwerkvorrichtung durchgeführt wird, wobei das Verfahren Folgendes umfasst:

• Senden von Uplink-Ablaufsteuerungsinformationen an ein Endgerät in einem Zeitfach n, wobei die Uplink-Ablaufsteuerungsinformationen für Folgendes verwendet werden:

◦ Durchführen einer Ablaufsteuerung eines gemeinsam genutzten physikalischen Uplink-Kanals eines Zeitfachs n+k1 und
◦ Erhalten einer maximalen Anzahl erster Downlink-Datenpakete, die durch die Netzwerkvorrichtung an das Endgerät von einem Zeitfach n-k3 zu einem Zeitfach n+k2 gesendet werden, wobei n eine nicht negative ganze Zahl ist, k1, k2 und k3 alle positive ganze Zahlen sind und k2<k1 oder k2=k1;

• Senden erster Downlink-Datenpakete, deren Anzahl kleiner als oder gleich der maximalen Anzahl erster Downlink-Datenpakete an das Endgerät ist, wobei die ersten Downlink-Datenpakete Folgendes umfassen:

◦ zweite Downlink-Datenpakete, die durch die Netzwerkvorrichtung an das Endgerät von dem Zeitfach n-k3 zu dem Zeitfach n gesendet werden, und
◦ dritte Downlink-Datenpakete, die durch die Netzwerkvorrichtung an das Endgerät von dem Zeitfach n+1 zu dem Zeitfach n+k2 gesendet werden,

wobei die Uplink-Ablaufsteuerungsinformationen erste Anzeigeinformationen umfassen, wobei die ersten Anzeigeinformationen verwendet werden, um eine Anzahl Q2 der zweiten Downlink-Datenpakete anzuzeigen,
• Bestimmen der maximalen Anzahl der ersten Downlink-Datenpakete gemäß der folgenden Formel:

$$\min(k2', (Q3-Q2))+Q2,$$

wobei k2'eine Anzahl von Zeitfächern ist, die ein Downlink-Datenpaket von dem Zeitfach n+1 zu dem Zeitfach n+k2 übertragen dürfen, Q3 eine maximale Anzahl von Prozessen der hybriden automatischen Wiederholungsanforderung ist, die durch das Endgerät unterstützt werden, Q2 eine nicht negative ganze Zahl ist und Q2 eine Anzahl der zweiten Downlink-Datenpakete anzeigt und Q3 eine positive ganze Zahl ist;
• Empfangen von Quittungsinformationen des ersten Downlink-Datenpakets von dem Endgerät auf dem gemeinsam genutzten physikalischen Uplink-Kanal des Zeitfachs n+k1 basierend auf der bestimmten maximalen Anzahl der ersten Downlink-Datenpakete.

**13.** Netzwerkvorrichtung, die konfiguriert ist, um das Verfahren nach Anspruch 12 durchzuführen.


**Revendications**

**1.** Procédé d'envoi d'informations d'accusé de réception effectué par un dispositif terminal, le procédé comprenant :

• la réception d'informations de planification de liaison montante depuis un dispositif réseau dans une cellule temporelle n, les informations de planification de liaison montante étant utilisées pour :

◦ planifier un canal partagé de liaison montante physique d'une cellule temporelle n + k1, et
◦ obtenir une quantité maximale de premiers paquets de données de liaison descendante autorisés à être envoyés par le dispositif réseau au dispositif terminal à partir d'une cellule temporelle n-k3 vers une cellule temporelle n + k2, n étant un entier non négatif, k1, k2, et k3 étant tous des entiers positifs, et k2 < k1 ou k2 = k1,

• la réception de premiers paquets de données de liaison descendante dont la quantité est inférieure ou égale à la quantité maximale de premiers paquets de données de liaison descendante à partir du dispositif réseau, les premiers paquets de données de liaison descendante comprenant :

◦ des deuxièmes paquets de données de liaison descendante envoyés par le dispositif réseau au dispositif terminal de la cellule temporelle n-k3 à la cellule temporelle n, et
◦ des troisièmes paquets de données de liaison descendante envoyés par le dispositif réseau au dispositif terminal de la cellule temporelle n + 1 à la cellule temporelle n + k2,

dans lequel les informations de planification de liaison montante comprennent des premières informations d'indication, les premières informations d'indication sont utilisées pour indiquer une quantité Q2 des deuxièmes paquets de données de liaison descendante,
• la détermination de la quantité maximale des premiers paquets de données de liaison descendante selon la formule :

$$\min (k2', (Q3-Q2)) + Q2,$$

dans lequel k2' est une quantité de cellules temporelles autorisées à transmettre un paquet de données de liaison descendante de la cellule temporelle n + 1 à la cellule temporelle n + k2, Q3 est une quantité maximale de processus de demande de répétition automatique hybrides qui est prise en charge par le dispositif terminal, Q2 est un entier non négatif et Q2 indique une quantité des deuxièmes paquets de données de liaison descendante, et Q3 est un entier positif ; et
• l'envoi d'informations d'accusé de réception des premiers paquets de données de liaison descendante au dispositif réseau sur le canal partagé de liaison montante physique de la cellule temporelle n + k1 sur la base de la quantité maximale déterminée des premiers paquets de données de liaison descendante.

**2.** Procédé selon la revendication 1, dans lequel
les premières informations d'indication comprennent un indicateur d'attribution de liaison descendante, DAI.

**3.** Procédé selon l'une quelconque des revendications 1 à 2, dans lequel
la quantité maximale des premiers paquets de données de liaison descendante est Q1, les informations d'accusé de réception comprennent Q1 groupes d'informations d'accusé de réception, et Q1 est un entier positif.

**4.** Procédé selon l'une quelconque des revendications 1 à 3, dans lequel k2 est prédéfini, ou k2 est indiqué par les informations de planification de liaison montante, ou k2 est configuré en utilisant la signalisation de couche supérieure du dispositif réseau, ou k2 est déterminé sur la base d'une capacité de synchronisation de rétroaction de demande de répétition automatique hybride minimale prise en charge par le dispositif terminal.

**5.** Procédé selon l'une quelconque des revendications 1 à 4, dans lequel k3 est prédéfini, ou k3 est indiqué par les informations de planfication de liaison montante, ou k3 est configuré en utilisant la signalisation de couche supérieure du dispositif réseau, ou k3 est déterminé sur la base de la quantité maximale de processus de demande de répétition automatique hybrides prise en charge par le terminal dispositif.

**6.** Procédé selon l'une quelconque des revendications 1 à 5, dans lequel k2' + k3' $\leq$ Q3, et k3' est une quantité de cellules temporelles autorisées à transmettre un paquet de données de liaison descendante de la cellule temporelle n-k3 à la cellule temporelle n.

**7.** Procédé selon l'une quelconque des revendications 1 à 6, dans lequel la capacité de synchronisation de rétroaction de demande de répétition automatique hybride minimale prise en charge par le dispositif terminal est une période de temps la plus courte t à partir d'un point temporel auquel le dispositif terminal reçoit un dernier paquet de données de liaison descendante parmi les premiers paquets de données de liaison descendante jusqu'à un point temporel auquel le dispositif terminal envoie les informations d'accusé de réception des premiers paquets de données de liaison descendante, et t est une valeur minimale de (k1-k2).

**8.** Procédé selon l'une quelconque des revendications 1 à 7, dans lequel le procédé comprend en outre :
le début d'une génération des informations d'accusé de réception du premier paquet de données de liaison descendante dans la cellule temporelle n + k2.

**9.** Procédé selon l'une quelconque des revendications 1 à 8, dans lequel des informations d'accusé de réception des troisièmes paquets de données de liaison descendante sont générées dans une unité d'un bloc de transport, TB.

**10.** Procédé selon l'une quelconque des revendications 1 à 9, dans lequel les troisièmes paquets de données de liaison descendante sont reçus par le dispositif terminal à partir du dispositif de réseau dans une pluralité de porteuses, et les informations d'accusé de réception des troisièmes paquets de données de liaison descendante dans la pluralité de porteuses sont combinées pour générer les informations d'accusé de réception des troisièmes paquets de données de liaison descendante dans une logique ET une manière.

**11.** Dispositif terminal configuré pour effectuer l'un quelconque des procédés selon les revendications 1 à 10.

**12.** Procédé de réception d'informations d'accusé de réception effectué par un dispositif réseau, le procédé comprenant :

• l'envoi d'informations de planification de liaison montante à un dispositif terminal dans une cellule temporelle n, les informations de planification de liaison montante étant utilisées pour :

○ planifier un canal partagé de liaison montante physique d'une cellule temporelle n + k1, et
○ obtenir une quantité maximale de premiers paquets de données de liaison descendante envoyés par le dispositif réseau au dispositif terminal à partir d'une cellule temporelle n-k3 vers une cellule temporelle n + k2, n étant un entier non négatif, k1, k2 et k3 étant tous des entiers positifs, et k2 < k1 ou k2 = k1 ;

• l'envoi de premiers paquets de données de liaison descendante dont la quantité est inférieure ou égale à la quantité maximale de premiers paquets de données de liaison descendante au dispositif terminal, les premiers paquets de données de liaison descendante comprenant :

○ des deuxièmes paquets de données de liaison descendante envoyés par le dispositif réseau au dispositif terminal de la cellule temporelle n-k3 à la cellule temporelle n, et
○ des troisièmes paquets de données de liaison descendante envoyés par le dispositif réseau au dispositif terminal de la cellule temporelle n + 1 à la cellule temporelle n + k2,

dans lequel les informations de planification de liaison montante comprennent des premières informations d'indication, les premières informations d'indication sont utilisées pour indiquer une quantité Q2 des deuxièmes paquets de données de liaison descendante,
• la détermination de la quantité maximale des premiers paquets de données de liaison descendante selon la formule :

$$min\ (k2', (Q3-Q2)) + Q2,$$

dans lequel k2' est une quantité de cellules temporelles autorisées à transmettre un paquet de données de liaison descendante de la cellule temporelle n + 1 à la cellule temporelle n + k2, Q3 est une quantité maximale de processus de demande de répétition automatique hybrides qui est prise en charge par le dispositif terminal, Q2 est un entier non négatif et Q2 indique une quantité des deuxièmes paquets de données de liaison descendante, et Q3 est un entier positif ;
• la réception d'informations d'accusé de réception du premier paquet de données de liaison descendante à partir du dispositif terminal sur le canal partagé de liaison montante physique de la cellule temporelle n + k1 sur la base de la quantité maximale déterminée des premiers paquets de données de liaison descendante.

13. Dispositif réseau configuré pour effectuer le procédé selon la revendication 12.

Network device → Downlink data → Terminal device

Network device ← Uplink data / ACK/NACK ← Terminal device

FIG. 1

n – k3        nn+1        n+k2  n+k1

t

Base station

Second downlink data packet

Third downlink data packet

Uplink scheduling information

Uplink data

Acknowledgement information

Terminal

FIG. 2

20

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201710686094

**Non-patent literature cited in the description**

• **NSN et al.** UCI on PUSCH for TDD eIMTA. *3GPP DRAFT,* 01 February 2014, R1-140545